# EUROPÄISCHE PATENTSCHRIFT

(11) **EP 2 484 456 B1**
(45) Veröffentlichungstag und Bekanntmachung des Hinweises auf die Patenterteilung: **17.06.2015**
(21) Anmeldenummer: 11192599.6
(22) Anmeldetag: 08.12.2011
(51) Int. Cl.: B08B 1/04, B08B 9/087, B60S 3/00

(54) **Reinigungsvorrichtung**
Cleaning device
Dispositif de nettoyage

(30) Priorität: 04.02.2011 DE 202011002414 U
(43) Veröffentlichungstag der Anmeldung: 08.08.2012
(73) Patentinhaber: Kathöfer, Felix, 33397 Rietberg (DE)
(72) Erfinder: Kathöfer, Felix, 33397 Rietberg (DE)

(56) Entgegenhaltungen:
- DE-A1- 19 706 150
- US-A- 4 231 132

## Beschreibung

Die Erfindung betrifft eine Vorrichtung zur Reinigung und Pflege der Innenwände von Kofferaufbauten und Containern, die mit Hilfe mindestens einer drehbar angetriebenen Reinigungsbürste gereinigt werden, wobei die Vorrichtung an einem teleskopartigen ausfahrbarem Schiebearm angeordnet ist.

Reinigungsvorrichtungen und das Reinigen von Oberflächen, insbesondere das Reinigen von Wänden, Fassaden und Dächern, sind allgemein aus dem Stand der Technik bekannt. Eine Vorrichtung zum Reinigen von Fassaden und Dächern ist in der DE 20 2008 006 012 U1 beschrieben. Die Reinigungsbürste ist am freien Ende einer verlängerbaren Stange angeordnet, die auch als Halterung für eine Wasser-Druckluftleitung und ein elektrisches Kabel dient. Das elektrische Kabel versorgt den Elektromotor mit Strom, der die Reinigungsbürste antreibt. Mit Hilfe einer solchen Vorrichtung lassen sich Fassaden und Dächer mit geringem technischen Aufwand und Arbeitseinsatz reinigen, allerdings ist diese Konstruktion einer Reinigungsvorrichtung nicht für eine effiziente Reinigung von Innenwänden in Kofferaufbauten bei Kraftfahrzeugen und von Innenwänden von durch Kraftfahrzeuge transportable Container geeignet.

Eine weitere Reinigungsvorrichtung wird in der DE 20 2010 005 248 U1 offenbart. Aus der Offenbarung ist ersichtlich, dass ein raupenangetriebenes Fahrzeug mit einer ausfahrbaren teleskopartigen Hubstange verwendet wird. An der Hubstange ist eine Einrichtung zum Reinigen angeordnet. Die Einrichtung besteht aus einer Reinigungsbürste zum Reinigen senkrecht stehender Wände, damit die senkrechten Wände nicht manuell, sondern wirtschaftlich gereinigt werden können. Mit Hilfe einer, an einem raupenangetriebenen Fahrzeug angeordneten Reinigungseinrichtung, lässt sich mit relativ geringem technischen Aufwand, durch die Auf- und Abbewegung der Hubstange, eine entsprechende Auf- und Abbewegung der Reinigungsbürste erzeugen, so dass senkrecht stehende Wände gereinigt werden können. Allerdings ist ein raupenangetriebenes Fahrzeug mit der daran angeordneten Reinigungseinrichtung nicht geeignet, die Innenwände von Kofferaufbauten oder Containern zu reinigen. Eine weitere Vorrichtung wird in der DE 197 06 150 A1 offenbart. Aus der Offenbarung ist eine Vorrichtung zur Reinigung des Innenraums eines Tankcontainer mittels langzylindrischer Bürsten ersichtlich.

Das technische Gebiet betrifft also das Reinigen von Innenwänden bei Aufbauten von Kraftfahrzeugen mit Hilfe von Reinigungsvorrichtungen. Kraftfahrzeuge, insbesondere Lastkraftwagen einschließlich Hänger, werden für den Güterverkehr, damit ist der Güterverkehr auf den Straßen gemeint, zur Beförderung von Gütern aller Art eingesetzt. Ein Lastkraftwagen ist ein Kraftfahrzeug mit starrem Rahmen, bzw. tragenden Chassis, welches zum Tragen einer Last einen bestimmten Aufbau aufweist, der vornehmlich zur Beförderung von Gütern bestimmt ist. Je nach zu transportierenden Gut, wird für die Beförderung des Gutes entweder ein spezieller Lastkraftwagen oder eine spezieller Aufbau verwendet.

Ein erster Aufbau kann beispielsweise aus einem Kofferaufbau bestehen. Der Kofferaufbau ist ein Fahrzeugaufbau mit festen Wänden in der Form eines geschlossenen Kastens. Der Kasten wird aus stabilen Seitenwänden aus Holz, Aluminium, Kunststoff, oder einer Kombination daraus, gebildet. Der hier angesprochene Aufbau ist i.d.R. fest mit dem Chassis verbunden und vom Führerhaus räumlich getrennt und in sich geschlossen.

Ein zweiter besonderer Aufbau stellt der Thermokoffer dar, der bei Kühlfahrzeugen zum Einsatz kommt und für temperaturgeführte Transporte verwendet wird. Die Innenräume dieser zuvor genannten verschiedenen Aufbauten verschmutzen durch den Transport von Gütern. Das Reinigen der Innenwände dieser Aufbauten erfolgt bisher mit bekannten handlichen Gerätschaften, mit denen eine manuelle Reinigung vorgenommen wird.

Ein dritter spezieller Kastenaufbau auf Lastkraftwagen wird beim Tiertransport verwendet. Die stabilen Seitenwände können mit Öffnungen versehen sein. Es liegt klar auf der Hand, dass die Innenräume solcher Aufbauten, aufgrund der Tiersekrete, sehr schnell verschmutzen. Aufgrund der EU-Richtlinie sind an Tiertransporte hohe Auflagen, die auch die Hygiene betreffen, verbunden. Entsprechendes ist der Tiertransportverordnung zu entnehmen. Dem Reinigen der Innenwände solcher Aufbauten kommt daher besondere Bedeutung zu. Die Reinigung erfolgt manuell und ist daher nicht wirtschaftlich.

Es gibt jedoch auch wechselbare Kofferaufbauten, oder, als vierte Aufbauart, den Container, insbesondere sei hier der ISO-Container genannt. ISO-Container sind weltweit nach ISO 668 genormte Großbehälter, mit dem das Verladen, Befördern, Lagern und Entladen von Gütern vereinfacht und beschleunigt wird. Zum Transport solcher Container werden Lastkraftwagen, bestehend aus einer Sattelzugmaschine und einem Sattelauflieger, verwendet, wobei der Sattelauflieger mit einem Containerchassis ausgestattet ist. Je nachdem welche Güter in den Containern transportiert wurden, sind deren Innenräume mehr oder weniger stark verschmutzt. Auch hier erfolgt das Reinigen des Innenraumes eines Containers mit einfachen Mitteln, wodurch es sehr zeitaufwendig ist und somit nicht kostengünstig erfolgt.

Des Weiteren können Sattelauflieger die zu den Anhängern gehören, selbst aus einem Sattelkoffer bestehen. Ein solcher Sattelkoffer kann, wie ein Kastenaufbau, aus stabilen Seitenwänden, aus Holz, Aluminium, Kunststoff oder einer Kombination daraus, gebildet sein. Eine besondere Ausführung stellen die isolierten Kühlkoffer, sogenannte Thermokoffer, dar. Auch die Innenwände dieser beiden Kofferaufbauten werden mit herkömmlichen, einfachen Mitteln gereinigt.

Der Erfindung liegt daher die Aufgabe zugrunde, eine Reinigungsvorrichtung der eingangs genannten Art zu schaffen, welches die vorgenannten Nachteile der bekannten Anordnungen aus dem Stand der Technik vermeidet und eine technische Lösung anzugeben, die es ermöglicht, die Innenräume von Aufbauten einerseits mit geringem Aufwand schnell und gründlich und andererseits wirtschaftlich und somit kostengünstig, zu reinigen.

Die Lösung der Aufgabe besteht also darin, die Nachteile der vorhandenen Reinigungsvorrichtungen und der verwendeten raupengetriebenen Fahrzeuge, die heute bei den Reinigungsvorrichtungen aus dem Stand der Technik Anwendung finden, zu vermeiden und eine Reinigungsvorrichtung mit vorteilhaftem Antrieb zu verwenden, welche einfach und kostengünstig herzustellen ist und ein Reinigen und Pflegen der Innenräume von Aufbauten an Kraftfahrzeugen ermöglicht. Im Prinzip handelt es sich um eine Reinigungsvorrichtung die zum Anbau an verschiedene Maschinen und Fahrzeuge geeignet ist, mit deren Hilfe kastenförmige Innenräume von Fahrzeugen gereinigt werden können.

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den nachstehenden Unteransprüchen und der Beschreibung.

Erreicht wird dies dadurch, dass die Vorrichtung aus einem geometrischen Metallkreuz gebildet wird, das in seinem Schnittpunkt bzw. Mittelpunkt auch als Zentrum bezeichnet, eine Schubstange in Z-Richtung aufweist und dass jeweils an den freien Enden der vertikalen und horizontalen Metallarme ein Antriebsmotor und mindestens eine Reinigungsbürste angeordnet sind, wobei eine Reinigungsbürste mit Hilfe eines Antriebsmotors angetrieben wird.

Der Antrieb der Reinigungsbürsten kann mit Hilfe von Hydroantrieben erfolgen und der Hydroantrieb wiederum kann mit Hilfe von unter Druck stehendem Wasser betrieben werden. Vorzugsweise wird der Antrieb der Reinigungsbürsten mit Hilfe von Hydraulikmotoren gebildet. Der Antrieb der Hydraulikmotoren erfolgt über die maschinenseitige oder fahrzeugseitige Hydraulik. Auch ist es denkbar, einen elektromotorischen Antrieb vorzusehen.

Bei einer bevorzugten Ausführungsform sind die vertikalen und horizontalen Metallarme des Metallkreuzes in sich stufenlos verschiebbar, wie bei einem Teleskop, und mit Hilfe jeweils eines hydraulischen Zylinders vor- und zurück verschiebbar, wobei der Antrieb der hydraulischen Zylinder über die maschinenseitige oder fahrzeugseitige Hydraulik erfolgt. Durch das stufenlose Verschieben der teleskopartig ausgestalteten vertikalen und horizontalen Metallarme kann der Kontakt, bzw. der Anpressdruck der Reinigungsbürsten zu den Innenwänden eines Kofferaufbaues optimal eingestellt werden.

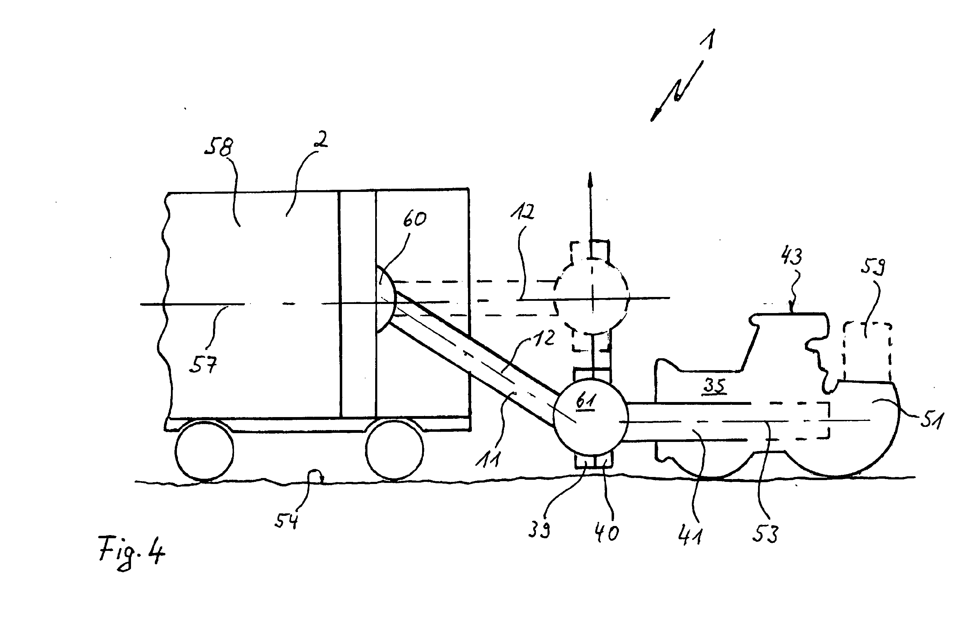

Ein weiterer erfindungsgemäßer Vorteil besteht darin, dass diese technische Funktion benötigt wird, um die Reinigungsbürsten auf unterschiedliche Größen von Innenräumen der Kofferaufbauten einzustellen. Überschreiten die Abmessungen der Innenräume eines Kofferaufbaues ein bestimmtes räumliches Einstellmaß in der Höhe und/oder der Breite der am Metallkreuz angeordneten und in der Höhe und Breite stufenlos einstellbaren Reinigungsbürsten, so können die Reinigungsbürsten gewechselt werden. Für die unterschiedlichen Größen der Kofferaufbauten, bzw. Container, stehen verschiedene Größen an Reinigungsbürsten zur Verfügung. Ein Satz Reinigungsbürsten, vorzugsweise bestehend aus 4 Reinigungsbürsten, ist beispielsweise für ein quadratisches Querschnittformats eines Kofferaufbaues abgestimmt. Ein anderer Satz Reinigungsbürsten ist für ein rechteckiges Querschnittformats ausgelegt. Im Normalfall besteht ein Satz Reinigungsbürsten aus 4 Reinigungsbürsten, so dass an jedem vertikalen und horizontalen Metallarm eine Reinigungsbürste angeordnet ist. Ein Satz Reinigungsbürsten kann aber auch aus 8 Reinigungsbürsten bestehen, so dass an jedem vertikalen und horizontalen Metallarm zwei Reinigungsbürsten angeordnet sind. Auch eine Kombination von verschieden Anordnungen ist möglich. D.h., dass beispielsweise an den sich gegenüberliegenden vertikalen Metallarmen jeweils eine Reinigungsbürste und an den sich gegenüberliegenden horizontalen Metallarmen jeweils zwei nebeneinander liegende Reinigungsbürsten angeordnet sein können, woraus sich 6 Reinigungsbürsten für einen Satz ergeben. Als Reinigungsbürsten werden bevorzugt Walzenbürsten eingesetzt, andere Ausführungen von Reinigungsbürsten sind denkbar. Bevorzugt werden in einem Satz von Reinigungsbürsten 4 Walzenbürsten unterschiedlicher Länge verwendet. Ein solcher Satz Reinigungsbürsten enthält zwei kürzere und zwei längere Walzenbürsten. Zwei sich am Metallkreuz, z.B. auf der horizontalen Achse parallel beabstandet und gegenüberstehend angeordnete Walzenbürsten entsprechen der kürzeren Ausführung, und zwei sich am Metallkreuz, z.B. auf der vertikalen Achse parallel beabstandet und gegenüberstehend angeordnete Walzenbürsten entsprechen der längeren Ausführung, siehe hierzu die Ausführungen in der Figur 4. Diese Konstellation der Anordnung der Walzenbürsten stellt eine Reinigung entlang der Innenkanten des Innenraumes eines Kofferaufbaues sicher. Die Art der Reinigungsbürsten kann den zu reinigenden Innenflächen angepasst sein. Z.B. können die Reinigungsbürsten mit Borsten aus unterschiedlichen Materialien oder auch anderen Abtragsmitteln oder dergleichen bestehen.

Des Weiteren wird die stufenlose Verstellung der vertikalen und horizontalen Metallarme zu Beginn des Reinigungsvorganges benötigt, um die Vorrichtung in einen Innenraum eines Kofferaufbaues ohne störende Behinderungen einführen zu können. Störende Behinderungen könnten sich durch die Kanten der Seitenwände, die Kanten der Boden- und Deckenwand und die Türscharniere ergeben. Die stufenlos verstellbaren Metallarme ziehen sich soweit zurück, bis das Außenmaß, welches sich aus dem Abstand der Reinigungsbürsten ergibt, soweit verkleinert ist, bis das Innenmaß des Innenraumes eines Kofferaufbaues zumindest geringfügig unterschritten ist. Ist die Reinigungsvorrichtung komplett in den Innenraum eingeschoben, verschieben sich die vertikalen und horizontalen Metallarme wieder nach außen und der Reinigungsprozess kann beginnen. Der im Anfangsbereich des Innenraumes beim Starten des Reinigungsprozess nicht gereinigte Streifen wird beim Rücklauf der Vorrichtung gereinigt.

Damit die Vorrichtung eine Reinigung auch von sehr langen Sattelkoffern, wie von Sattelaufliegern oder Containern her bekannt, vornehmen kann, besteht ein weiterer erfinderischer Schritt darin, eine Schubstange anzuordnen, welche die Verbindung zwischen dem Metallkreuz einerseits und einem teleskopartigen ausfahrbaren Schiebearm andererseits herstellt.

Das eine Ende der Schubstange ist im Wesentlichen im rechten Winkel am Metallkreuz befestigt und das andere freie Ende weist eine Verbindungseinrichtung auf. Die Verbindungseinrichtung bildet die Schnittstelle zwischen der Schubstange, bzw. der Vorrichtung zum Reinigen und Pflegen der Innenräume einerseits und zur Einhängevorrichtung am teleskopartigen ausfahrbaren Schiebearm andererseits.

An der Schnittstelle befinden sich auch die Anschlüsse der Hydraulikleitungen und der Wasserleitung, die über Steckverbindungen verfügen. Die Hydraulikleitungen und die Wasserleitung werden an der Schubstange, oder in dieser, geführt. Die Hydraulikleitungen leiten den Öldruck, kommend von der maschinenseitigen oder fahrzeugseitigen Hydraulik, an die vertikalen und horizontalen, am Metallkreuz angeordneten Hydraulikmotoren, weiter. Die Wasserleitung leitet das Wasser zu den Reinigungsbürsten. Zur besseren Reinigung, zur Verbesserung der Hygienemaßnahmen oder aus anderen Gründen, kann dem Wasser Reinigungsmittel beigemischt werden.

Die lösbare Verbindung zwischen der Verbindungseinrichtung und der Einhängevorrichtung am Schiebearm kann über bekannte Mittel, wie beispielsweise eine Schraubverbindung und/oder Steckverbindung, erfolgen. Auch eine Schnellkupplung ist denkbar. Im Prinzip ist die Schubstange mit einem teleskopartigen Schiebearm einer stationären Maschine oder einem Fahrzeug lösbar verbunden. Der teleskopartige ausfahrbare Schiebearm kann an einer stationären Maschine oder einem Fahrzeug, vorzugsweise einem Flurfördergerät, angeschlossen sein oder ein Bestandteil davon sein. Bei den Fahrzeugen kann es sich um Flurfördergeräte handeln, vorzugsweise um einen Teleskoplader. Ein Teleskoplader ist eine fahrbare Baumaschine, die als Ausrüstungsträger konzipiert ist. D.h., dass der Teleskoplader mit verschiedenen Ausrüstungsteilen ausgestattet werden kann und somit die unterschiedlichsten Aufgaben erledigen kann. In diesem Fall wird am Hubarm, bzw. Schiebearm, eine Einhängevorrichtung angebracht, welche geeignet ist, die Schubstange der Reinigungsvorrichtung aufzunehmen. Anhand der Allradlenkung des Teleskopladers, z.B. im Krabbengangmodus, ist eine Positionierung der Reinigungsvorrichtung vor der Öffnung eines kastenförmigen Aufbaus eines Fahrzeuges optimal gegeben. Ist der Teleskoplader in die Reinigungsposition gefahren, wird die Reinigungsvorrichtung mit Hilfe des Schiebearms in den Kofferaufbau eingeführt und der Reinigungsprozess kann beginnen. Aufgrund der erfinderischen Vorrichtung werden alle vier Innenwände des Kofferaufbaus gleichzeitig gereinigt. Das Vorschieben und Zurückziehen der Reinigungsvorrichtung beim Reinigungsvorgang erfolgt mit dem teleskopartigen ausfahrbaren Schiebearm, der über die stationäre maschinenseitige oder fahrzeugseitige Hydraulik angetrieben wird.

Ein weiterer erfindungsgemäßer Vorteil besteht darin, dass die als Antrieb für die Reinigungsbürsten verwendeten Hydraulikmotoren, eine Drehrichtungsänderung für die Reinigungsbürsten vornehmen können. Eine Änderung der Drehrichtung beim Reinigungsvorgang optimiert die Reinigungswirkung. Beim Vorschieben der Reinigungsvorrichtung während des Reinigungsprozesses, ist es vorteilhaft, wenn die Reinigungsbürste für die rechte und obere Innenwand eine Drehrichtung gegen den Uhrzeigersinn und die Reinigungsbürste für die linke und untere Innenwand eine Drehrichtung im Uhrzeigersinn aufweist. Alternativ kann die Drehrichtung der Reinigungsbürsten natürlich auch reziprok erfolgen. Jede Reinigungsbürste ist einzeln in der Drehrichtung einstellbar. Erreicht die Reinigungsvorrichtung die Rückwand eines Innenraumes, wird der Vorschub des Schiebearmes von der Maschine oder dem Fahrzeug aus gestoppt und zwei der vier verschiebbaren Metallarme des Metallkreuzes werden zurückgezogen. Beispielweise werden die zwei horizontalen Metallarme der linken und rechten Reinigungsbürste bzw. die Reinigungsbürste für die linke und rechte Innenwand zurückgezogen. Voraussetzung dafür ist, dass es sich um die beiden kürzeren Reinigungsbürsten handelt. Nur für die beiden kürzeren Reinigungsbürsten besteht die Möglichkeit, an der Rückwand innerhalb des Innenraumes einen größeren Verschiebeweg zurückzulegen. Während die beiden anderen, etwas längeren Reinigungsbürsten, hier die obere und untere Reinigungsbürste, im Prinzip von einer Seitenwand, in diesem Beispiel von der linken Seitenwand, bis zur gegenüberliegenden rechten Seitenwand reichen und daher im Innenraum nur geringfügig verschoben werden können. Durch das Zurückziehen zweier verschiebbarer Metallarme werden gleichzeitig die an den Metallarmen angeordneten Reinigungsbürsten über die Rückwand geführt, wodurch diese gereinigt wird. Haben die beiden Metallarme ihre innere Endposition erreicht, wird die Drehrichtung der beiden Reinigungsbürsten geändert. Die Drehrichtung der Reinigungsbürste für die linke Seitenwand entspricht jetzt einer Drehung gegen den Uhrzeigersinn und die Drehrichtung der Reinigungsbürste für die rechte Seitenwand entspricht jetzt einer Drehung im Uhrzeigersinn. Haben die beiden Reinigungsbürsten ihre Drehrichtung verändert, werden die beiden Metallarme wieder vorgeschoben, bis diese ihre äußere Endposition erreicht haben. In der Endposition werden auch die Drehrichtungen der Reinigungsbürsten für die obere und untere Reinigungsbürste umgekehrt. Die obere Reinigungsbürste weist jetzt eine Drehrichtung im Uhrzeigersinn und die unter Reinigungsbürste eine Drehrichtung gegen den Uhrzeigersinn auf. Ist die Drehrichtung aller Reinigungsbürsten geändert bzw. umgekehrt, wird die Reinigungsvorrichtung vom Schiebearm wieder zurück gezogen, bis die Reinigungsvorrichtung den kastenförmigen Aufbau verlassen hat.

In einer weiteren erfindungsgemäßen Ausführung besteht jetzt die Möglichkeit, die Reinigungsvorrichtung um 90 Grad zu drehen und den Reinigungsvorgang zu wiederholen. Die Drehung der Reinigungsvorrichtung erfolgt somit an der Schnittstelle der Schubstange zum teleskopartigen Schiebearm. Damit eine Drehung der Schubstange, bzw. der Reinigungsvorrichtung, erfolgen kann, sind die Verbindungseinrichtung an der Schubstange und die Einhängevorrichtung am Schiebearm mit entsprechenden technischen Mitteln ausgestattet. Die technischen Mittel ermöglichen eine Drehung der Reinigungsvorrichtung um ihre Achse. Die Drehung der Reinigungsvorrichtung erfolgt in 90 Grad Schritten, wobei die Drehung im und gegen den Uhrzeigersinn erfolgen kann. Aufgrund der 90 Grad Drehung werden die sich paarweise gegenüberstehenden Reinigungsbürsten ebenfalls um 90 Grad gedreht. Die zuvor horizontal ausgerichteten und im Beispiel zuvor aufgezeigten längeren Reinigungsbürsten, welche die obere und untere Innenwand gereinigt hatten, stehen nach der Drehung um 90 Grad in der vertikalen Richtung. Die zuvor vertikal ausgerichteten und im Beispiel zuvor aufgezeigten kürzeren Reinigungsbürsten, welche die linke und rechte Seitenwand gereinigt haben, stehen nach der Drehung der Vorrichtung um 90 Grad in der horizontalen Richtung. Wird der Reinigungsprozess erneut gestartet, werden erst die Drehrichtungen der Reinigungsbürsten wieder geändert, bzw. umgekehrt. Die längeren Reinigungsbürsten stehen jetzt zur Reinigung der Seitenwände und die kürzeren Reinigungsbürsten für die obere Deckenwand und untere Bodenwand zur Verfügung. Am Ende des kastenförmigen Aufbaues der Rückwand angekommen, verfahren die kürzeren Reinigungsbürsten, wie zuvor beschrieben, wieder von außen nach innen. Aufgrund der durchgeführten 90 Grad Drehung der Vorrichtung verläuft der Verfahrweg der Reinigungsbürsten jetzt nicht von der linken und rechten Seitenwand zur Mitte der Rückenwand und zurück, sondern von der oberen Deckenwand und von der unteren Bodenwand zur Mitte der Rückenwand und zurück. Danach erfolgt, wie zuvor beschrieben, eine Umkehr der Drehrichtungen an den Reinigungsbürsten und die Reinigungsvorrichtung wird wieder herausgezogen.

Gemäß einem weiteren Aspekt der Erfindung wird vorgeschlagen, jeweils an einem Metallarm des Metallkreuzes der Reinigungsvorrichtung ein Stützrad anzuordnen. Die Stützräder haben die Funktion, die Reinigungsvorrichtung entlang der Innenwände zu führen und zu stützen. Die Führung der Reinigungsvorrichtung hat den Vorteil, dass der Abstand der Reinigungsbürsten zu den vier Innenwänden immer konstant gehalten werden kann. Vorteilhafterweise sind die Stützräder leicht und schnell an- und abmontierbar.

Ein konkretes Ausführungsbeispiel der Erfindung ist in den Zeichnungen rein schematisch dargestellt und wird nachfolgend näher beschrieben. Es zeigt:
- Fig. 1: in schematischer Darstellung eine komplette erfindungsgemäße Vorrichtung in Vorderansicht, und
- Fig.2: in veranschaulichter Seitendarstellung einen Kofferaufbau eines Fahrzeuges mit der erfindungsgemäßen Vorrichtung, die von einer stationären Maschine angetrieben wird, und
- Fig. 3: in veranschaulichter Seitendarstellung einen Kofferaufbau mit der erfindungsgemäßen Vorrichtung, die von einem Fahrzeug angetrieben wird, und
- Fig.4: in veranschaulichter Seitendarstellung einen Kofferaufbau mit der erfindungsgemäßen Vorrichtung, die von einem Teleskoplader angetrieben wird.

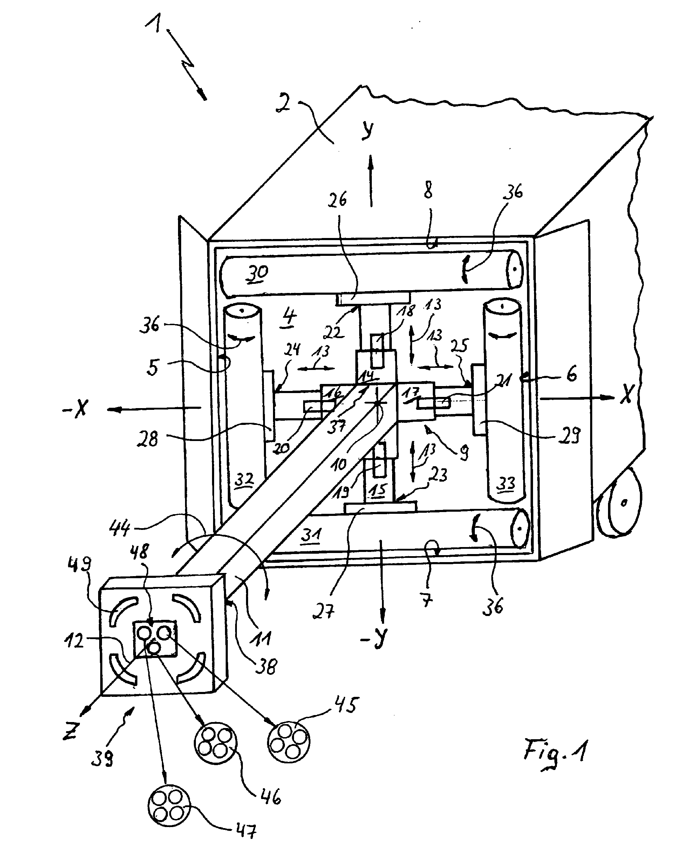

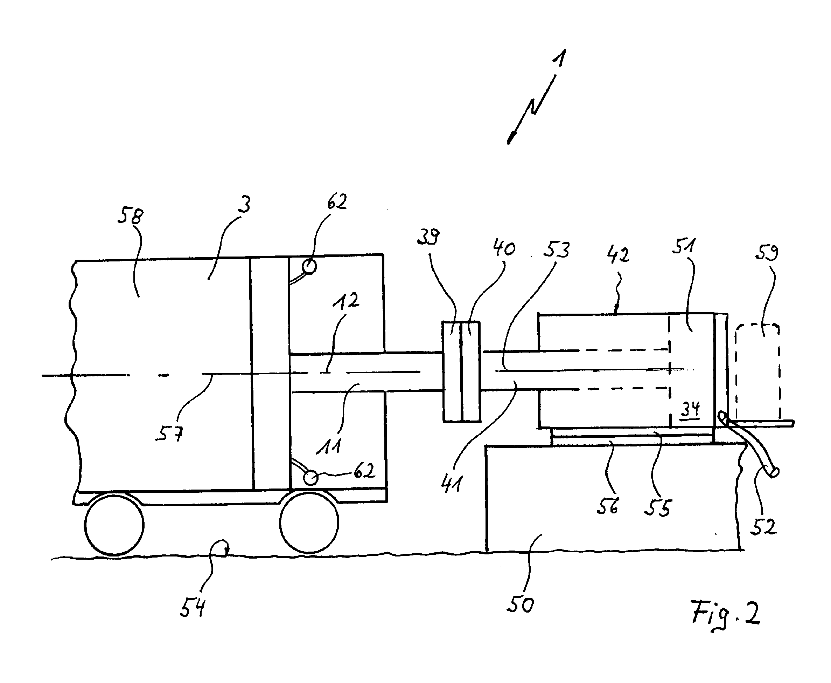

Die Fig.1 zeigt in schematischer Darstellung ein konkretes Ausführungsbeispiel einer Vorrichtung 1 zur Reinigung und Pflege der Innenwände 4 von Kofferaufbauten 2 und Containern 3, die mit Hilfe mindestens einer drehbar angetriebenen Reinigungsbürste 30, 31, 32, 33 gereinigt werden, wobei die Vorrichtung 1 an einem teleskopartigen, ausfahrbaren Schiebearm 41, siehe Figur 2, 3 und 4 anbaubar ist. Einander entsprechende Bezeichnungen sind in den Figuren 1 bis 4 mit den gleichen Bezugszeichen versehen.

Die erfindungsgemäße Anbauvorrichtung 1 besteht im Wesentlichen aus einem geometrischen Metallkreuz 9, das im Mittelpunkt 10 eine Schubstange 11 aufweist, die im Wesentlichen im rechten Winkel am Metallkreuz 9 befestigt ist und dessen Achse 12 in Z-Richtung weist. Des Weiteren wird das Metallkreuz 9 aus zwei vertikalen Metallarmen 14, 15 und zwei horizontalen Metallarmen 16, 17 gebildet. Die vertikalen Metallarme 14, 15, weisen in die Y- und minus Y- Richtung, während die horizontalen Metallarme 16, 17 in die X- und minus X- Richtung weisen. Die Metallarme 14, 15, 16, 17 sind teleskopartig ausgebildet und in sich stufenlos verschiebbar. Die Verschiebung der Metallarme 14, 15, 16, 17 kann über hydraulische Zylinder 18, 19, 20, 21 in zwei Richtungen, Vorwärts und Rückwärts 13 erfolgen. Der Antrieb der hydraulische Zylinder 18, 19, 20, 21 erfolgt über die maschinenseitige 34 oder fahrzeugseitige Hydraulik 35, siehe Figur 2, 3 und 4. An den freien Enden 22, 23, 24, 25 der vertikalen und horizontalen Metallarme 14, 15, 16, 17 ist jeweils ein Antriebsmotor 26, 27, 28, 29, vorzugsweise ein Hydraulikmotor angeordnet, wobei die Hydraulikmotoren 26, 27, 28, 29 über die maschinenseitige 34 oder fahrzeugseitige Hydraulik 35 angetrieben werden. Des Weiteren sind die vertikalen und horizontalen Metallarme 14, 15, 16, 17 Träger der Reinigungsbürsten 30, 31, 32, 33, die mit Hilfe der Hydraulikmotoren 26, 27, 28, 29 angetrieben werden. Die Drehrichtung 36, bzw. die Drehrichtungsänderung der Reinigungsbürsten 30, 31, 32, 33 im und gegen den Uhrzeigersinn ist vorgesehen. Die horizontale Reinigungsbürste 30, angeordnet am vertikalen Metallarm 14, reinigt die Deckenwand 8 und weist beim Vorwärtsschieben eine Drehung 36 gegen den Uhrzeigersinn auf. Die horizontale Reinigungsbürste 31, angeordnet am vertikalen Metallarm 15, reinigt die Bodenwand 7 und weist beim Vorwärtsschieben eine Drehung 36 im Uhrzeigersinn auf. Beide horizontalen Reinigungsbürsten 30, 31 reichen in ihrer Länge von der linken Seitenwand 5 bis zur rechten Seitenwand 6. Die vertikale Reinigungsbürste 32, angeordnet am horizontalen Metallarm 16, reinigt die linke Seitenwand 5 und weist beim Vorwärtsschieben eine Drehung 36 im Uhrzeigersinn auf. Die vertikale Reinigungsbürste 33, angeordnet am horizontalen Metallarm 17, reinigt die rechte Seitenwand 6 und weist beim Vorwärtsschieben eine Drehung 36 gegen den Uhrzeigersinn auf. Beide vertikalen Reinigungsbürsten 32, 33 reichen in ihrer Länge von der horizontalen Reinigungsbürste 30 der Deckenwand 8 bis zur horizontalen Reinigungsbürste 31 der Bodenwand 7. Die Länge der beiden vertikalen Reinigungsbürsten 32, 33, die zwischen den horizontalen Reinigungsbürsten 30, 31 angeordnet sind, sind daher etwas kürzer als die Länge der beiden Reinigungsbürsten 30, 31.

Die Schubstange 11 ist mit ihrem festen Ende 37 am Metallkreuz 9 befestigt und weist an ihrem freien Ende 38 eine Verbindungseinrichtung 39 auf. Die Verbindungseinrichtung 39 bildet die Schnittstelle zwischen der Schubstange 11 auf der Vorrichtungsseite und der Einhängevorrichtung 40 am teleskopartigen ausfahrbaren Schiebearm 41 auf der stationären Maschinenseite 42 oder der Fahrzeugseite 43 (siehe Figur 2, 3 und 4). Die Schubstange 11 ist lösbar mit einer stationären Maschine 42 oder einem Fahrzeug 43 verbindbar und ist Träger der Hydraulikleitungen 45, die zu den Hydraulikmotoren 26, 27, 28, 29 führen und der Hydraulikleitungen 46, die zu den hydraulischen Zylindern 18, 19, 20, 21 führen, sowie Träger der Wasserleitung 47. Die Wasserleitung 47 kann vorteilhafterweise auch aus vier Wasserleitungen 47 bestehen, wobei jeweils eine Wasserleitung 47 einem Metallarm 14, 15, 16, 17 und somit einer Reinigungsbürste 30, 31, 32 33 zugeordnet wird. Im Bereich der Reinigungsbürsten 30, 31, 32, 33 können auch Sprühdüsen (nicht dargestellt) angeordnet sein, an denen die Wasserleitungen 47 angeschlossen sind. Die Hydraulik- und Wasserleitungen 45, 46, 47 sind im Bereich der Verbindungseinrichtung 39 mit Steckverbindungen 48 versehen. Des Weiteren weist die Verbindungseinrichtung 39, im Zusammenspiel mit der Einhängevorrichtung 40 am Schiebearm 41, Mittel 49 auf, die geeignet sind, eine Drehung 44 der Vorrichtung 1 um die Achse 12 der Schubstange 11 zu ermöglichen. Die Drehung 44, bzw. eine Drehrichtungsänderung 44 der Vorrichtung 1, ist im und gegen den Uhrzeigersinn möglich, wobei die Drehung 44 in 90 Grad Schritten erfolgt.

Aus der Fig.2 ist in veranschaulichter Seitendarstellung ein Kofferaufbau 2 eines Kraftfahrzeuges mit der erfinderischen Vorrichtung 1 ersichtlich. In diesem Anwendungsbeispiel wird die erfinderische Vorrichtung 1 in einem Container 3, der auf einem Sattelauflieger steht, zur Reinigung und Pflege der Innenwände 4 eingesetzt. Die Vorrichtung 1 entspricht den Ausführungen gemäß der Figur 1. Beschreibungen und Angaben zur Vorrichtung 1, die identisch in der Figur 1 enthalten sind, werden z.T. aufgeführt und sind bei übereinstimmenden Elementen daher mit denselben Bezugszeichen versehen.

Die an der Schubstange 11 angeordnete Verbindungseinrichtung 39 ist mit der Einhängevorrichtung 40, die am freien Ende des teleskopartigen Schiebearms 41 angeordnet ist, verbunden. Der Schiebearm 41 kann bis zu einer Länge von max. 30m ausgefahren werden. Daher ist an jedem Metallarm 14, 15, 16, 17 des Metallkreuzes 9 zur Führung der Vorrichtung 1 ein Stützrad 62 angeorddnet. Der ein- und ausfahrbare Schiebarm 41, der Bestandteil einer stationären Maschine 42 ist, wird von einem Hydraulikmotor 51 angetrieben. Der Hydraulikmotor 51 stellt auch die Versorgung der Antriebsmotoren 26, 27, 28, 29 und der hydraulischen Zylinder 18, 19, 20, 21 an der Vorrichtung 1 sicher. Der Wasseranschluss 52 für die Wasserversorgung beim Reinigungsvorgang erfolgt über einen externen Anschluss. Die stationäre Maschine 42 befindet sich auf einer Rampe 50, damit die Längsachse 53 des Schiebarms 41 die gleiche Höhe zum Boden 54 aufweist wie die Achse 12 der Schubstange 11. Vorteilhafterweise ist die Maschine 42 auf einer axial verschiebbaren Unterlage 55 und einem Drehteller 56 angeordnet. Die axiale Unterlage 55 ist in Querrichtung des Containers 3 verschiebbar, wodurch die angeflanschte Vorrichtung 1 zur Längsachse 53 des Innenraumes 58 des Containers 3 auf gleicher Höhe in paralleler Richtung ausgerichtet werden kann. Um auch eine Winkelabweichung zwischen den beiden Längsachsen 57 des Innenraumes und der Längsachse 53 des Schiebearmes 41 auszugleichen, kann der Drehteller 56 benutzt werden. Ist die Maschine 42 mit der angeflanschten Reinigungsvorrichtung 1 ausgerichtet, kann der Reinigungsprozess erfolgen.

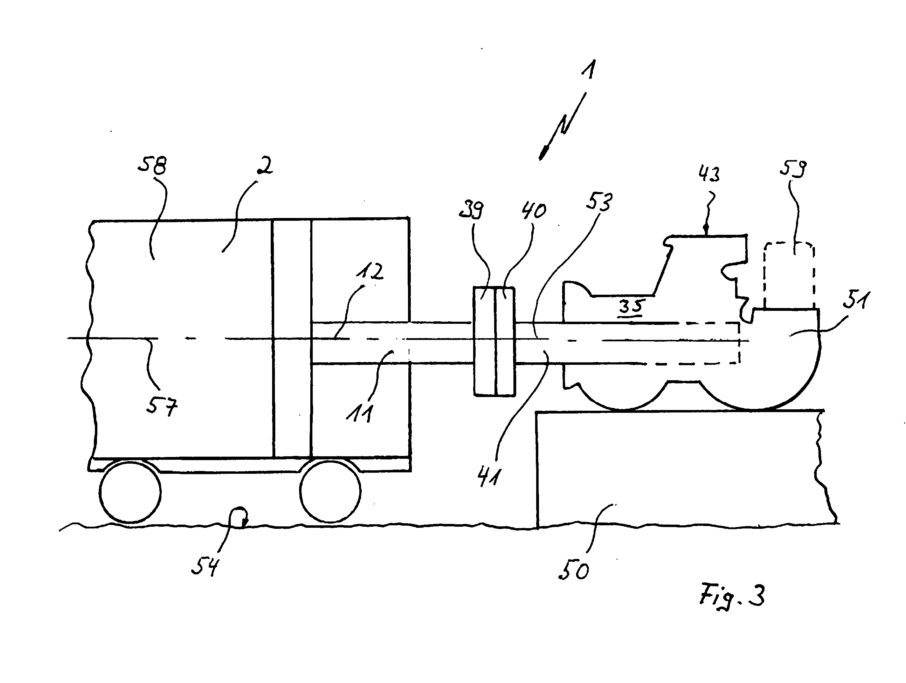

Aus der Fig.3 ist in veranschaulichter Seitendarstellung ein Kofferaufbau 2 eines Kraftfahrzeuges mit der erfinderischen Vorrichtung 1 ersichtlich. In diesem Anwendungsbeispiel wird die erfinderische Vorrichtung 1 in einen kastenförmigen Aufbau 2 eines Tiertransporters, zur Reinigung und Pflege der Innenwände 4, eingesetzt. Die Vorrichtung 1 entspricht den Ausführungen gemäß der Figur 1 und der Anschluss und die Versorgung der Reinigungsvorrichtung 1 ist, gemäß den Ausführungen der Figur 2, zu entnehmen. Beschreibungen und Angaben zur Vorrichtung 1 und zum Anbau an den Schiebearm 41, die identisch in den Figuren 1 und 2 enthalten sind, werden z.T. aufgeführt und sind bei übereinstimmenden Elementen daher mit denselben Bezugszeichen versehen.

Anstelle der stationären Maschine 42, gemäß der Figur 2, wird die Vorrichtung 1 an ein Fahrzeug 43, vorzugsweise ein Flurfördergerät, angeschlossen. Das Flurfördergerät 43 weist ebenfalls einen teleskopartigen Schiebearm 41 auf und befindet sich ebenfalls auf einer Rampe 50. Aufgrund der Beweglichkeit des Flurfördergerätes 43 kann dieses eine geeignete Position zur Längsachse 57 des Innenraumes 58 einnehmen. Eine Änderung des Schiebarmes 41 gegenüber der Höhe der Längsachse 57 eines Innenraumes 58, kann mit einem Flurfördergerät 43 möglich sein. Die Wasserversorgung für den Reinigungsprozess erfolgt in diesem Ausführungsbeispiel über einen, am Flurförderfahrzeug vorhandenen Wassertank 59. Ist das Ausrichten der Reinigungsvorrichtung 1 zum Innenraum 58 des Kofferaufbaues 2 erfolgt, kann der Reinigungsprozess beginnen.

Aus der Fig.4 ist in veranschaulichter Seitendarstellung ein Kofferaufbau 2 eines Kraftfahrzeuges mit der erfinderischen Vorrichtung 1 ersichtlich. In diesem Anwendungsbeispiel wird die Vorrichtung 1 in einen kastenförmigen Aufbau 2 eines Kühltransporters, zur Reinigung und Pflege der Innenwände 4, eingesetzt. Die Vorrichtung 1 entspricht den Ausführungen gemäß der Figur 1, und der Anschluss und die Versorgung der Reinigungsvorrichtung 1 ist gemäß den Ausführungen der Figur 3 zu entnehmen. Beschreibungen und Angaben zur Vorrichtung 1, die identisch in den Figuren 1 enthalten sind, werden z.T. aufgeführt und sind bei übereinstimmenden Elementen daher mit denselben Bezugszeichen versehen.

Anstelle der stationären Maschine 42 gemäß der Figur 2 und des Flurförderfahrzeuges 43 gemäß der Figur 3, wird die Vorrichtung 1 an einen Teleskoplader 43, angeschlossen. Der Teleskoplader 43 befindet sich auf der gleichen Ebene, bzw. dem gleichen Boden 54, wie der Kühltransporter 43. Der Teleskoplader 43 weist ebenfalls einen teleskopartigen Schiebearm 41 auf, der auch in die Höhe verfahrbar ist. Aufgrund der Beweglichkeit des Flurfördergerätes 43 kann dieses eine geeignete Position zur Längsachse 57 des Innenraumes 58 einnehmen. Da sich der Teleskoplader 43 ebenerdig bewegt, ist es erforderlich, das freie Ende der Schubstange 11, bzw. die Einhängevorrichtung 40 des Schiebearm 41, der vorgegebenen Höhe der Längsachse 53 des Innenraumes 58 des kastenförmigen Aufbaues 2, anzupassen. Um dieses Erfordernis erfüllen zu können, ist die Schubstange 11 einerseits am Metallkreuz 9 gelenkartig befestigt, wobei das Gelenk 60 feststellbar ist und andererseits an der Schnittstelle der Verbindungseinrichtung 39 zur Einhängevorrichtung gelenkartig verbunden, wobei das Gelenk 61 feststellbar ist. In einer anderen Ausführungsanordnung kann sich das Gelenk 61 auch an der Einhängevorrichtung 40 befinden. Ist das Ausrichten der Reinigungsvorrichtung 1 zum Innenraum 58 des Kofferaufbaues 2 erfolgt, kann der Reinigungsprozess beginnen. Mit einem Teleskoplader 43 besteht auch die Möglichkeit, die in der Figur 2 und 3 beschriebenen Aufbauten zu reinigen.

**Bezugszeichenliste:**

| | | | |
|---|---|---|---|
| 1 | Vorrichtung | 31 | Reinigungsbürste (an 15) |
| 2 | Kofferaufbau | 32 | Reinigungsbürste (an 16) |
| 3 | Container | 33 | Reinigungsbürste (an 17) |
| 4 | Innenwände | 34 | maschinens. Hydraulik |
| 5 | Linke Seitenwand | 35 | fahrzeugseit. Hydraulik |
| 6 | Rechte Seitenwand | 36 | Drehrichtungsänderung |
| 7 | Bodenwand | 37 | festes Ende (v.11) |
| 8 | Deckenwand | 38 | freies Ende (v.11) |
| 9 | Metallkranz | 39 | Verbindungseinrichtung |
| 10 | Mittelpunkt | 40 | Einhängevorrichtung |
| 11 | Schubstange | 41 | Schiebearm |
| 12 | Achse | 42 | Maschine |
| 13 | Vor- u. Rückwärts | 43 | Fahrzeug |
| 14 | Vertikaler Metallarm (v.9) | 44 | Drehung (v.1) |
| 15 | Vertikaler Metallarm (v.9) | 45 | Hydraulikltg.( 26,27,28,29) |
| 16 | horizontaler Metallarm (v.9) | 46 | Hydraulikltg.( 18,19,20,21) |
| 17 | horizontaler Metallarm (v.9) | 47 | Wasserleitung |
| 18 | Hydraulischer Zylinder (an 14) | 48 | Steckverbindungen |
| 19 | Hydraulischer Zylinder (an 15) | 49 | Mittel |
| 20 | Hydraulischer Zylinder (an 16) | 50 | Rampe |
| 21 | Hydraulischer Zylinder (an 17) | 51 | Hydraulikmotor (v.42,43) |
| 22 | Freies Ende (v.14) | 52 | Wasseranschluss |
| 23 | Freies Ende (v.15) | 53 | Längsachse (v.41) |
| 24 | Freies Ende (v.16) | 54 | Boden |
| 25 | Freies Ende (v.17) | 55 | Unterlage |
| 26 | Antriebsmotor (an 22 zu 30) | 56 | Drehteller |
| 27 | Antriebsmotor (an 23 zu 31) | 57 | Längsachse (v.58) |
| 28 | Antriebsmotor (an 24 zu 32) | 58 | Innenraum (v.2, 3) |
| 29 | Antriebsmotor (an 25 zu 33) | 59 | Wassertank |
| 30 | Reinigungsbürste (an 14) | 60 | Gelenk (an 37) |
| 62 | Stützrad (an 14,15,16,17) | 61 | Gelenk (an 38) |

## Patentansprüche

1. Vorrichtung (1) zur Reinigung und Pflege der Innenwände (4) von Kofferaufbauten (2) und Containern (3), die mit Hilfe mindestens einer drehbar angetriebenen Reinigungsbürste (30, 31, 32, 33) gereinigt werden, wobei die Vorrichtung (1) an einem teleskopartigen, ausfahrbaren Schiebearm () angeordnet ist, **dadurch gekennzeichnet, dass** die Vorrichtung (1) aus einem geometrischen Metallkreuz (9) gebildet wird, das in seinem Mittelpunkt (10) eine Schubstange (11) enthält, dessen Achse (12) in Z-Richtung weist und dass jeweils an den freien Enden (22, 23, 24, 25) der vertikalen und horizontalen Metallarme (14, 15, 16, 17) ein Antriebsmotor (26, 27, 28, 29) und mindestens eine Reinigungsbürste (30, 31, 32, 33) angeordnet sind, wobei eine Reinigungsbürste (30, 31, 32, 33) mit Hilfe eines Antriebsmotors (26, 27, 28, 29) angetrieben wird.

2. Vorrichtung (1) nach Anspruch 1, **dadurch gekennzeichnet, dass** der Antrieb der Reinigungsbürsten (30, 31, 32, 33) aus Hydraulikmotoren (26, 27, 28, 29) gebildet wird, wobei der Antrieb der Hydraulikmotoren (26, 27, 28, 29) über die maschinenseitige (34) oder fahrzeugseitige Hydraulik (35) erfolgt, wobei eine Drehrichtungsänderung (36) der Reinigungsbürsten (30, 31, 32, 33) vorgesehen ist.

3. Vorrichtung (1) nach Anspruch 1, **dadurch gekennzeichnet, dass** die vertikalen und horizontalen Metallarme (14, 15, 16, 17) des Metallkreuzes (9) in sich stufenlos verschiebbar und mit Hilfe jeweils eines hydraulischen Zylinders (18, 19, 20, 21) vor- und zurück verschiebbar sind, wobei der Antrieb der hydraulischen Zylinder (18, 19, 20, 21) über die maschinenseitige (34) oder fahrzeugseitige Hydraulik (35) erfolgt.

4. Vorrichtung (1) nach Anspruch 1, **dadurch gekennzeichnet, dass** das eine Ende (37) der Schubstange (11) im Wesentlichen im rechten Winkel am Metallkreuz (9) befestigt ist und dass andere freie Ende (38) eine Verbindungseinrichtung (39) aufweist, wobei die Verbindungseinrichtung (39) die Schnittstelle zwischen der Schubstange (11) einerseits und einer Einhängevorrichtung (40) am teleskopartigen ausfahrbarem Schiebearm (41) andererseits bildet.

5. Vorrichtung (1) nach einem der vorhergehenden Ansprüche, **dadurch gekennzeichnet, dass** die Schubstange (11) lösbar mit einer stationären Maschine (42) oder einem Fahrzeug (43) verbindbar ist.

6. Vorrichtung (1) nach Anspruch 5, **dadurch gekennzeichnet, dass** das Fahrzeug (43) aus einem Teleskoplader gebildet ist.

7. Vorrichtung (1) nach einem der vorhergehenden Ansprüche, **dadurch gekennzeichnet, dass** die Vorrichtung (1) um ihre, durch die Schubstange (11) verlaufende Achse (12), drehbar ist.

8. Vorrichtung (1) nach einem der vorhergehenden Ansprüche, **dadurch gekennzeichnet, dass** die Verbindungseinrichtung (39) an der Schubstange (11) und die Einhängevorrichtung (40) am Schiebearm (41) Mittel aufweisen, wodurch eine Drehung der Vorrichtung (1) ermöglicht wird.

9. Vorrichtung (1) nach einem der vorhergehenden Ansprüche, **dadurch gekennzeichnet, dass** die Drehung der Vorrichtung (1) im und gegen den Uhrzeigersinn in 90 Grad Schritten erfolgt.

10. Vorrichtung (1) nach einem der vorhergehenden Ansprüche, **dadurch gekennzeichnet, dass** ein vertikaler und horizontaler Metallarm (14, 15, 16, 17) ein Stützrad (62) aufweist.

## Claims

1. A device (1) for the cleaning and maintenance of the inner walls (4) of box bodies (2) and containers (3), which are cleaned by means of at least one rotatably driven cleaning brush (30, 31, 32, 33), wherein the device (1) is arranged on a telescope-like, extendable sliding arm (), **characterized in that** the device (1) is formed from a geometric metal cross (9), which contains in its centre point (10) a connecting rod (11), the axis (12) of which points in Z-direction and that respectively on the free ends (22, 23, 24, 25) of the vertical and horizontal metal arms (14, 15, 16, 17) a drive motor (26, 27, 28, 29) and at least one cleaning brush (30, 31, 32, 33) are arranged, wherein a cleaning brush (30, 31, 32, 33) is driven by means of a drive motor (26, 27, 28, 29).

2. The device (1) according to claim 1, **characterized in that** the drive of the cleaning brushes (30, 31, 32, 33) is formed from hydraulic motors (26, 27, 28, 29), wherein the drive of the hydraulic motors (26, 27, 28, 39) takes place via the machine-side (34) or vehicle-side hydraulic system (35), wherein a change in rotation direction (36) of the cleaning brushes (30, 31, 32, 33) is provided.

3. The device (1) according to claim 1, **characterized in that** the vertical and horizontal metal arms (14, 15, 16, 17) of the metal cross (9) are continuously displaceable in themselves and are displaceable back and forth by means respectively of a hydraulic cylinder (18, 19, 20, 21), wherein the drive of the hydraulic cylinders (18, 19, 20, 21) takes place via the machine-side (34) or vehicle-side hydraulic system (35).

4. The device (1) according to claim 1, **characterized in that** the one end (37) of the connecting rod (11) is fastened substantially at right angles to the metal cross (9) and that the other free end (38) has a connecting arrangement (39), wherein the connecting arrangement (39) forms the interface between the connecting rod (11) on the one hand and a suspension device (40) on the telescope-like extendable sliding arm (41) on the other hand.

5. The device (1) according to one of the preceding claims, **characterized in that** the connecting rod (11) is connectable detachably with a stationary machine (42) or with a vehicle (43).

6. The device (1) according to claim 5, **characterized in that** the vehicle (43) is formed from a telescopic loader.

7. The device (1) according to one of the preceding claims, **characterized in that** the device (1) is rotatable about its axis (12) running through the connecting rod (11).

8. The device (1) according to one of the preceding claims, **characterized in that** the connecting arrangement (39) on the connecting rod (11) and the suspension device (40) on the sliding arm (41) have means whereby a rotation of the device (1) is enabled.

9. The device (1) according to one of the preceding claims, **characterized in that** the rotation of the device (1) takes place clockwise and anticlockwise in 90 degree stages.

10. The device (1) according to one of the preceding claims, **characterized in that** a vertical and horizontal metal arm (14, 15, 16, 17) has a supporting wheel (62).

## Revendications

1. Dispositif (1) destiné à nettoyer et à entretenir les parois intérieures (4) de carrosseries en fourgon (2) et conteneurs (3), que l'on nettoie à l'aide d'au moins une brosse nettoyante (30, 31, 32, 33) entraînée en rotation, le dispositif (1) étant placé sur un bras coulissant () télescopique déployable, **caractérisé en ce qu'**on réalise le dispositif (1) à partir d'une croix métallique (9) géométrique, qui en son point central (10) comprend une bielle (11) dont l'axe (12) est dirigé dans la direction Z et **en ce que** chaque fois sur les extrémités (22, 23, 24, 25) libres des bras métalliques (14, 15, 16, 17) horizontaux et verticaux sont placés un moteur d'entraînement (26, 27, 28, 29) et au moins une brosse nettoyante (30, 31, 32, 33), une brosse nettoyante (30, 31, 32, 33) étant entraînée à l'aide d'un moteur d'entraînement (26, 27, 28, 29).

2. Dispositif (1) selon la revendication 1, **caractérisé en ce que** l'entraînement des brosses nettoyantes (30, 31, 32, 33) est formé de moteurs hydrauliques (26, 27, 28, 29), l'entraînement des moteurs hydrauliques (26, 27, 28, 29) s'effectuant via le système hydraulique (35) de la machine (34) ou du véhicule, un changement du sens de rotation (36) des brosses nettoyantes (30, 31, 32, 33) étant prévu.

3. Dispositif (1) selon la revendication 1, **caractérisé en ce que** les bras métalliques (14, 15, 16, 17) horizontaux et verticaux de la croix métallique (9) son progressivement déplaçables en soi et sont déplaçable en aller et retour à l'aide de chaque fois un vérin hydraulique (18, 19, 20, 21), l'entraînement des vérins hydrauiques (18, 19, 20, 21) s'effectuant via le système hydraulique (35) de la machine (34) ou du véhicule.

4. Dispositif (1) selon la revendication 1, **caractérisé en ce qu'**une extrémité (37) de la bielle (11) est fixée sensiblement à angle droit sur la croix métallique (9) et **en ce que** l'autre extrémité (38) libre comporte un système de liaison (39), le système de liaison (39) formant l'interface entre la bielle (11) d'une part et un dispositif d'accrochage (40) sur le bras coulissant (41) télescopique déployable d'autre part.

5. Dispositif (1) selon l'une quelconque des revendications précédentes, **caractérisé en ce que** la bielle (11) peut se relier de manière amovible avec une machine (42) stationnaire ou avec un véhicule (43).

6. Dispositif (1) selon la revendication 5, **caractérisé en ce que** le véhicule (43) est formé par un chargeur télescopique.

7. Dispositif (1) selon l'une quelconque des revendications précédentes, **caractérisé en ce que** le dispositif (1) est rotatif autour de son axe (12) s'étendant à travers la bielle (11).

8. Dispositif (1) selon l'une quelconque des revendications précédentes, **caractérisé en ce que** le système de liaison (39) sur la bielle (11) et le dispositif d'accrochage (40) sur le bras coulissant (41) comportent des moyens permettant la rotation du dispositif (1).

9. Dispositif (1) selon l'une quelconque des revendications précédentes, **caractérisé en ce que** la rotation du dispositif (1) s'effectue dans le sens horaire et dans le sens anti-horaire, par pas de 90 degrés.

10. Dispositif (1) selon l'une quelconque des revendications précédentes, **caractérisé en ce qu'**un bras métallique (14, 15, 16, 17) vertical et horizontal comporte une roue support (62).
